# EUROPEAN PATENT APPLICATION

(11) **EP 3 892 502 A1**
(43) Date of publication of application: **13.10.2021**
(21) Application number: 19891880.7
(22) Date of filing: 21.03.2019
(51) Int. Cl.: B60S 5/06, B60L 53/80

(54) **BATTERY CONNECTION DEVICE, BATTERY TRANSIT, LIFTING AND TRANSLATION UNIT AND CHARGING AND POWER EXCHANGE SYSTEM**

(30) Priority: 07.12.2018 CN 201822051559 U
(71) Applicant: NIO (ANHUI) HOLDING CO., LTD, Economic and Technological Development Zone Hefei Anhui 230601 (CN)
(72) Inventor: ZHAO, Zhiling, Hong Kong (CN); SUN, Chuangcheng, Hong Kong (CN); YANG, Chao, Hong Kong (CN); LIU, Yuchi, Hong Kong (CN); WANG, Zheng, Hong Kong (CN)
(74) Representative: Vossius & Partner Patentanwälte Rechtsanwälte mbB
(86) International application number: PCT/CN2019/078953
(87) International publication number: WO 2020/113853

(57) **Abstract**

The invention relates to a battery docking device, a battery transit unit, a lifting unit, a translation unit and a battery charging and swapping system. The battery docking device is arranged to convey a battery between a battery swap platform for performing vehicle battery swap operation and a battery compartment, and comprises: a lifting unit provided with a lifting mechanism for performing lifting movement in a first direction, the first direction being perpendicular to a working surface of the battery swap platform; a translation unit connected to the lifting unit and used for enabling the lifting unit to perform translational movement in a second direction perpendicular to the first direction; and a battery transit unit connected to the lifting mechanism and provided with at least one battery space used for storing a battery shifted thereto from the battery swap platform and to be conveyed to the battery compartment, or storing a battery shifted thereto from the battery compartment and to be conveyed to the battery swap platform. The invention has the advantages of having a compact structure, taking up less space, being capable of effectively improving the efficiency of battery swap operation and the like.

## Description

### Technical Field

The invention relates to the technical field of battery charging and swap, in particular to a battery docking device, a battery transit unit, a lifting unit, a translation unit and a battery charging and swapping system.

### Background Art

With the progress of science and technology and the development of society, various types of new energy vehicles such as battery electric vehicles and hybrid vehicles are increasingly widely used. In terms of these new types of vehicles, aspects involving quick battery swapping, etc. have become more and more important. For example, battery power replenishment time will be an important indicator in order to achieve a vehicle battery power replenishment experience surpassing the traditional vehicle refueling experience. Battery swapping is a way to achieve quick power replenishment. Before breakthrough progress is made in battery technology and an available safe and quick charging technology occurs, battery swapping will still be the most possible way to achieve a vehicle battery power replenishment time that can be comparable to or even superior to the refueling time for traditional vehicles. Although various battery swap apparatus, devices or systems have been developed, they still have problems such as complicated structures, large occupied space, tedious battery swap operation, long time consumption on battery conveying.

### Summary of the Invention

In view of the above, the invention provides a battery docking device, a battery transit unit, a lifting unit, a translation unit, and a battery charging and swapping system, thereby effectively solving or alleviating one or more of the above problems and other problems existing in the prior art.

First, according to a first aspect of the invention, provided is a battery docking device used for conveying a battery between a battery swap platform for performing vehicle battery swap operation and a battery compartment. The battery docking device comprises:
a lifting unit provided with a lifting mechanism for performing lifting movement in a first direction, the first direction being perpendicular to a working surface of the battery swap platform;
a translation unit connected to the lifting unit and used for enabling the lifting unit to perform translational movement in a second direction perpendicular to the first direction; and
a battery transit unit connected to the lifting mechanism, and provided with at least one battery space used for storing a battery shifted thereto from the battery swap platform and to be conveyed to the battery compartment, or storing a battery shifted thereto from the battery compartment and to be conveyed to the battery swap platform.

In the battery docking device according to the invention, optionally, the translation unit is provided with a guide member, and the lifting unit is configured to have a frame structure and is provided with a mating member to be installed in the guide member to perform the translational movement.

In the battery docking device according to the invention, optionally, the lifting unit is provided with a power member for providing power to enable the mating member to perform the translational movement along the guide member.

In the battery docking device according to the invention, optionally, the lifting mechanism is a scissor lift mechanism, which is mounted on the frame structure.

In the battery docking device according to the invention, optionally, the battery transit unit is provided with two or more battery spaces, wherein at least one battery space is used for storing a used battery dismounted from a vehicle parked on the battery swap platform, and at least a further battery space is used for storing a fully charged battery shifted thereto from the battery compartment; and/or
the lifting unit and the translation unit are configured to operate synchronously; and/or
the battery docking device is configured such that, when the battery docking device is in an initial position, one battery space of the battery transit unit corresponds to a conveying position, facing the battery docking device, of the battery dismounted from the vehicle parked on the battery swap platform.

In the battery docking device according to the invention, optionally, the two or more battery spaces are stacked in the first direction; and/or
one or more conveying members are disposed in at least one battery space and used for shifting a battery into and out of the battery space in a third direction parallel to a battery storage direction in the battery compartment.

Second, according to a second aspect of the invention, provided is a battery transit unit configured as a battery transit unit in a battery docking device as described in any one of the above.

Furthermore, according to a third aspect of the invention, provided is a lifting unit configured as a lifting unit in a battery docking device as described in any one of the above.

Moreover, according to a fourth aspect of the invention, provided is a translation unit configured as a translation unit in a battery docking device as described in any one of the above.

In addition, according to a fifth aspect of the invention, further provided is a battery charging and swapping platform, which comprises a battery swap platform for performing vehicle battery swap operation and a battery compartment. The battery charging and swapping platform further comprises a battery docking device as described in any one of the above, which is arranged on a first side and/or a second side of the battery compartment, the first side is adjacent to the battery swap platform, and the second side is away from the battery swap platform.

The principles, characteristics, features and advantages of the technical solutions according to the invention will become apparent from the following detailed description in conjunction with the accompanying drawings. For example, compared with the prior art, the battery docking device designed and provided by the invention has a compact structure, occupies a small space and is convenient to manufacture, transport and install, can effectively improve the efficiency of battery swap operation, and particularly can obviously reduce the time consumption in links such as battery conveying between a battery swap platform and a battery compartment of an existing battery swap station.

### Brief Description of the Drawings

The technical solutions of the invention will be further described in detail below with reference to accompanying drawing and embodiments. However, it should be understood that these drawings are designed merely to conceptually illustrate the structural construction described herein and are not necessarily drawn to scale.
Fig. 1 is a schematic perspective structural view of an embodiment of a battery docking device according to the invention.
Fig. 2 is an exploded schematic structural view of the embodiment of the battery docking device shown in Fig. 1.
Fig. 3 is a side view of a battery transit unit in the embodiment of the battery docking device shown in Fig. 1.
Fig. 4 is a top view of the battery transit unit in the embodiment of the battery docking device shown in Fig. 1.

### Detailed Description of Embodiments

First, it should be noted that the structures, compositions, features, and advantages of a battery docking device, a battery transit unit, a lifting unit, a translation unit and a battery charging and swapping platform of the invention will be specifically described below by way of example. However, all the descriptions are for the purpose of illustration only and should not be construed as limiting the invention in any way.

In the description, the technical term "battery" includes, but is not limited to, a battery, a battery set, a battery pack, etc. for providing power to a vehicle, the technical terms "first" and "second" are used only for the purpose of distinguishing expressions and are not intended to indicate their order and relative importance, and the technical terms "upper", "lower", "right", "left", "front", "rear", "vertical", "horizontal", derivatives thereof and the like should be taken in connection with the orientations in the drawings, and the invention may adopt various alternative orientations unless expressly stated otherwise.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein, and accordingly further embodiments according to the invention should be considered to be also within the scope of this disclosure. Furthermore, for the sake of simplifying the drawings, the same or similar parts and features may only be marked in one or several positions in the same drawing.

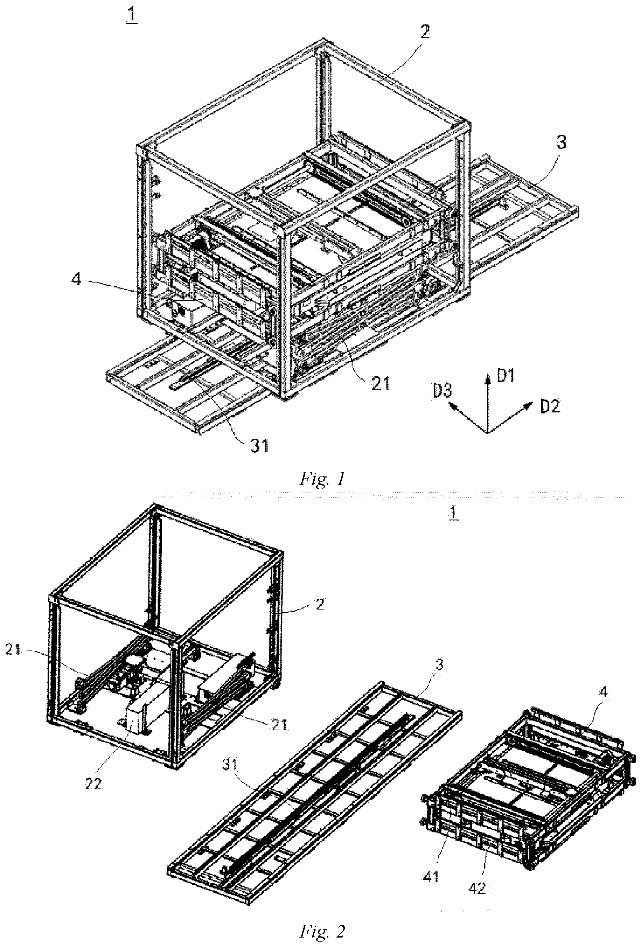

Referring to Figs. 1 and 2, the basic structural constitution of an embodiment of a battery docking device according to the invention is schematically shown in two accompanying drawings, and the invention will be described in detail in conjunction with this example.

In this embodiment, the battery docking device 1 is arranged to convey a battery between a battery swap platform for performing vehicle battery swap operation and a battery compartment, for example, the battery swap platform and the battery compartment may be arranged on the left and right sides, respectively, of the battery docking device 1 shown in Fig. 1, thereby forming a highly compact layout, effectively improving space utilization rate and speeding up battery turnover, and then shortening the overall time consumption of the battery swap operation.

As shown in Figs. 1 and 2, the battery docking device 1 may comprise a lifting unit 2, a translation unit 3, and a battery transit unit 4. In the device, a lifting mechanism 21 is disposed in the lifting unit 2, the lifting mechanism 21 may be in the form of, for example, a scissor lift mechanism or any other suitable mechanism for performing lifting movement in a first direction D1, indicated in Fig. 1. The first direction D1 is perpendicular to the working surface of the battery swap platform, and generally, that is the vertical direction of a site for vehicle battery swap operation.

In an alternative, the lifting unit 2 may be made of a frame structure, which not only ensures its good overall structural strength, but also enables effective material saving and efficient production using various suitable processing techniques such as welding. As an alternative, the lifting mechanism 21 may be very conveniently mounted directly to the frame structure of the lifting unit 2.

With respect to the translation unit 3, it is connected to the lifting unit 2 so as to enable the lifting unit 2 to perform translational movement in a second direction D2, indicated in Fig. 1. The second direction D2 is perpendicular to the above-mentioned first direction D1, and generally, it is optionally kept parallel to the longitudinal direction of the battery swap platform.

By way of exemplary illustration, in an alternative, the translation unit 3 may be fixed to the work surface of the site (such as the ground and the base surface of a mobile charging station). A guide member 31 may be disposed on the translation unit 3, for example, a linear guide rail or the like may be disposed at the bottom of the translation unit 3 as shown in Fig. 2, and translational movement of the lifting unit 2 on the translation unit 3 is then achieved by means of a mating member (such as a sliding block and a guide rail wheel which can be mounted in the linear guide rail) which can be disposed on the lifting unit 2 for corresponding cooperation with the guide member 31, by means of which the lifting unit 2 and the battery transit unit 4 can reach a suitable position associated with the battery swap platform or battery compartment in order to complete battery conveying work.

In an alternative, a power member 22 (such as, a motor) may be disposed in the lifting unit 2 in order to provide power for controlling the mating member on the lifting unit 2 to perform translational movement along the guide member 31 on the translation unit 3. Furthermore, in an alternative, the lifting unit 22 and the translation unit 23 may be configured to operate synchronously, which will be very advantageous in that the above-mentioned translational and lifting movements may be performed simultaneously or substantially simultaneously as desired, thereby significantly saving the time for these corresponding operations.

The battery transit unit 4 is connected to a lifting mechanism 21 in the lifting unit 2, so that the lifting movement can be performed by means of the lifting mechanism 21, thereby reaching the suitable position associated with the battery swap platform or battery compartment for battery conveying. Specifically, as shown, for example, in Fig. 1, the battery transit unit 4 may be mounted in the frame structure of the lifting unit 2 and connected to the lifting mechanism 21 also arranged in the frame structure, so that the battery transit unit 4 is like assembled and integrated into the frame structure of the lifting unit 2, which effectively improve the space utilization rate and significantly reduces the overall occupied space of the device.

In addition, the battery transit unit 4 may be configured to have one or more battery spaces according to actual application demands, such that a battery (such as a used battery and a failed battery) dismounted from a vehicle parked on the battery swap platform may be stored in the battery space, and is then conveyed by the battery docking device 1 and stored in the battery compartment for storage, charging, etc.; alternatively, a fully charged battery shifted out from the battery compartment may be stored in the battery space of the battery transit unit 4 and is then conveyed to the battery swap platform by the battery docking device 1 for mounting onto a vehicle with a battery to be swapped, parked on the battery swap platform.

In an alternative, the battery docking device 1 may be configured such that, when it is in its initial position, one battery space of its battery transit unit 4 corresponds to an outward conveying position of the battery dismounted from the vehicle on the battery swap platform. For example, the height of the battery space at this time can be made the same as or substantially the same as the height of the dismounted battery when it is ready to be conveyed outward from the battery swap platform toward the battery docking device 1, such that the time for corresponding operations and processing can be effectively saved, and the overall battery swap efficiency and success rate can be further improved.

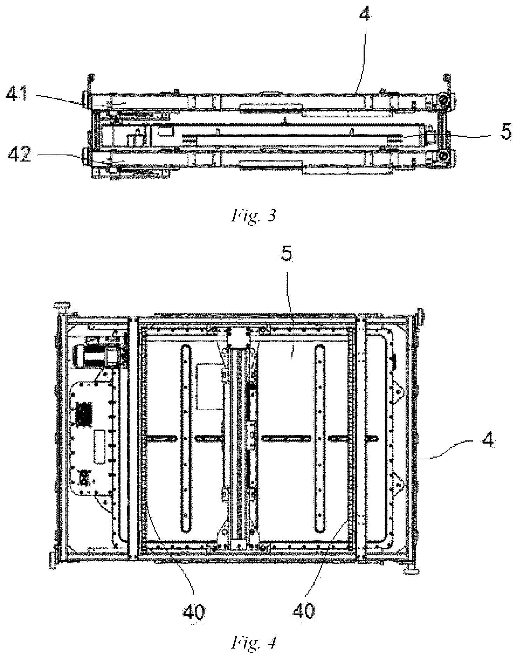

In the given embodiment of the battery docking device, as shown in Figs. 3 and 4, the battery transit unit 4 is illustratively shown as having a two-tier battery space structure, namely an upper-tier battery space 41 and a lower-tier battery space 42, for example, the battery 5 currently stored in the lower-tier battery space 42 is also shown in Fig. 4. In specific application, one of the upper-tier battery space 41 and the lower-tier battery space 42 may be used to store a battery (which will be conveyed to the battery compartment for storage, charging, etc.) dismounted from the vehicle parked on the battery swap platform, and the other is used to store a fully charged battery (which will be conveyed to the battery swap platform and mounted onto the vehicle) shifted out from the battery compartment. For example, the upper-tier battery space 41 may be used to store a fully charged battery, and the lower-tier battery space 42 may be used to store a used battery.

It should be appreciated that, without departing from the spirit of the invention, the battery transit unit 4 may be configured to have three, four or more tiers of battery spaces which are to be stacked in the first direction D1, so that a greater number of batteries dismounted from vehicles and fully charged batteries shifted out from the battery compartment may be stored, which will contribute to effective improvement in the working efficiency of battery swap operation. Of course, the invention also allows the battery spaces of the battery transit unit 4 to be arranged in parallel, or a portion thereof to be stacked while being arranged in parallel, so as to better meet various possible practical application demands.

Furthermore, in an alternative, at least one conveying member 40 (such as a conveyor belt and a roller) may be disposed in one or more battery spaces in the battery transit unit 4, for example, as shown in Fig. 5, a conveying member 40 may be disposed in each of the front and rear portions of the battery space of the battery transit unit 4. By means of such conveying members 40, it is possible to shift the batteries into and out of the battery spaces in a third direction D3, as indicated in Fig. 1. The third direction D3 is parallel to a storage direction of the batteries in the battery compartment, so that no adjustment of the storage direction of these batteries is required at all when the batteries are conveyed between the battery compartment and the battery spaces of the battery transit unit 4. Therefore, the time consumption on the battery conveying link can be remarkably reduced, and the efficiency of battery swap operation can be further improved.

Since the battery docking device of the invention has these significant technical advantages over the prior art as described above, it is very suitable for application to a battery charging and swapping system (for example, various types of charging stations for battery swapping and charging, such as fixed charging stations and mobile charging stations) in order to overcome the defects and disadvantages existing in the prior art, including those described hereinbefore.

According to another technical solution of the invention, provided is a battery charging and swapping system in which one or more battery docking devices designed and provided according to the invention are disposed, and the specific number, position layout, etc. of the battery docking devices can be flexibly set according to actual demands in different application scenarios. For example, the battery docking device may be arranged on the side, close to the battery charging and swapping platform, of the battery compartment in the battery charging and swapping system, that is, the battery docking device may be arranged between the battery compartment and the battery charging and swapping platform. As another example, the battery docking device may be arranged on the side, away from the battery charging and swapping platform, of the battery compartment, that is, in this case, the battery compartment is arranged between the battery swap platform and the battery docking device. As a further example, when a plurality of battery compartments are disposed simultaneously in the battery charging and swapping system, it is contemplated that the above two arrangement ways may be employed in combination for the battery docking devices in order to fully meet various possible practical application demands. In addition, according to yet another technical solution of the invention, further provided is a battery transit unit which can be separately manufactured and which is configured as a battery transit unit in a battery docking device designed and provided according to the invention, in order to provide these obvious technical advantages as previously mentioned of the solution of the invention.

Moreover, according to still a further technical solution of the invention, further provided is a lifting unit which can be separately manufactured and which is constructed as a lifting unit in a battery docking device designed and provided according to the invention, in order to provide these obvious technical advantages as previously mentioned of the solution of the invention.

Furthermore, the invention further provides a translation unit which can be separately manufactured and which is configured as a translation unit in a battery docking device designed and provided according to the invention in order to provide these obvious technical advantages as described above of the solution of the invention.

The battery docking device, the battery transit unit, the lifting unit, the translation unit and the battery charging and swapping system according to the invention are merely illustrated in detail as above by way of example. These examples are for the purpose of illustrating the principle of the invention and the implementations thereof only, rather than limiting the invention. Those skilled in the art can make various variations and improvements without departing from the spirit and scope of the invention. Therefore, all equivalent technical solutions should fall within the scope of the invention and be defined by the claims of the invention.

## Claims

1. A battery docking device arranged to convey a battery between a battery swap platform for performing vehicle battery swap operation and a battery compartment, **characterized by** comprising:
a lifting unit provided with a lifting mechanism for performing lifting movement in a first direction, the first direction being perpendicular to a working surface of the battery swap platform;
a translation unit connected to the lifting unit and used for enabling the lifting unit to perform translational movement in a second direction perpendicular to the first direction; and
a battery transit unit connected to the lifting mechanism, and provided with at least one battery space used for storing a battery shifted thereto from the battery swap platform and to be conveyed to the battery compartment, or storing a battery shifted thereto from the battery compartment and to be conveyed to the battery swap platform.

2. The battery docking device according to claim 1, **characterized in that** the translation unit is provided with a guide member, and the lifting unit is configured to have a frame structure and is provided with a mating member to be installed in the guide member to perform the translational movement.

3. The battery docking device according to claim 2, **characterized in that** the lifting unit is provided with a power member for providing power to enable the mating member to perform the translational movement along the guide member.

4. The battery docking device according to claim 2, **characterized in that** the lifting mechanism is a scissor lift mechanism, which is mounted on the frame structure.

5. The battery docking device according to any one of claims 1-4, **characterized in that** the battery transit unit is provided with two or more battery spaces, wherein at least one battery space is used for storing a battery dismounted from a vehicle parked on the battery swap platform, and at least a further battery space is used for storing a fully charged battery shifted thereto from the battery compartment; and/or
the lifting unit and the translation unit are configured to operate synchronously; and/or
the battery docking device is configured such that, when the battery docking device is in an initial position, one battery space of the battery transit unit corresponds to a conveying position, facing the battery docking device, of the battery dismounted from the vehicle parked on the battery swap platform.

6. The battery docking device according to claim 5, **characterized in that** the two or more battery spaces are stacked in the first direction; and/or
one or more conveying members are disposed in at least one battery space and used for shifting a battery into and out of the battery space in a third direction parallel to a battery storage direction in the battery compartment.

7. A battery transit unit, **characterized in that** the battery transit unit is configured as a battery transit unit in a battery docking device as described in any one of claims 1-6.

8. A lifting unit, **characterized in that** the lifting unit is configured as a lifting unit in a battery docking device as described in any one of claims 1-6.

9. A translation unit, **characterized in that** the translation unit is configured as a translation unit in a battery docking device as described in any one of claims 1-6.

10. A battery charging and swapping system, comprising a battery swap platform for performing vehicle battery swap operation and a battery compartment, **characterized by** further comprising one or more battery docking devices as described in any one of claims 1-6, which are arranged on a first side and/or a second side of the battery compartment, the first side being adjacent to the battery swap platform, and the second side being away from the battery swap platform.
